# EUROPEAN PATENT SPECIFICATION

(11) **EP 2 689 041 B1**
(45) Date of publication and mention of the grant of the patent: **28.04.2021**
(21) Application number: 12759895.1
(22) Date of filing: 21.03.2012
(51) Int. Cl.: C21B 13/00, C21B 11/00, F27D 3/08, C21B 13/02

(54) **DIRECT SMELTING PROCESS FOR HIGH SULPHUR FEED**
DIREKTSCHMELZVERFAHREN ZUR ZUFUHR VON SCHWEFEL IN GROSSEN MENGEN
PROCÉDÉ DE FUSION DIRECTE D'UNE CHARGE À TENEUR ÉLEVÉE EN SOUFRE

(30) Priority: 21.03.2011 AU 2011901040
(43) Date of publication of application: 29.01.2014
(73) Proprietor: Tata Steel Limited, Mumbai 400 001 (IN)
(72) Inventor: DAVIS, Mark Preston, West Shelley, Western Australia 6148 (AU); DRY, Rodney James, City Beach, Western Australia 6015 (AU); PILOTE, Jacques, Doubleview, Western Australia 6018 (AU); MEIJER, Hendrikus Koenraad Albertus, 1911 JR Uitgeest (NL)
(74) Representative: Lau, Sarah Jane
(86) International application number: PCT/AU2012/000293
(87) International publication number: WO 2012/126055

(56) References cited:
- EP-B1- 0 690 136
- EP-B1- 0 726 326
- WO-A1-00/22176
- WO-A1-00/22176
- WO-A1-98/42878
- US-A- 4 849 015

## Description

### TECHNICAL FIELD

The present invention relates to a molten bath-based process for direct smelting a metalliferous material involving the use of a smelt cyclone.

In particular, although by no means exclusively, the present invention relates to a molten bath-based smelting process for making iron that is able to accept high sulphur content iron-containing metalliferous feed materials directly, without the need for pre-treatment of the materials to remove sulphur before supplying the materials to a direct smelter.

### BACKGROUND ART

A known direct smelting process for a metalliferous material, such as iron-containing metalliferous feed materials, which relies principally on a molten bath as a smelting medium, and is generally referred to as the HIsmelt process, is described in International application PCT/AU96/00197 (WO 96/31627) in the name of the applicant.

The HIsmelt process as described in the International application in the context of direct smelting a metalliferous material in the form of iron-containing materials, particularly iron oxides and producing molten iron includes the steps of:
(a) forming a bath of molten iron and slag in a direct smelting vessel of a smelter;
(b) injecting into the bath: (i) metalliferous material, typically iron oxides; and (ii) solid carbonaceous material, typically coal, which acts as a reductant of the iron oxides and a source of energy; and
(c) smelting metalliferous material to iron in the molten bath.

The term "smelting" is herein understood to mean thermal processing wherein chemical reactions that reduce metal oxides take place to produce molten metal.

The HIsmelt process also includes post-combusting reaction gases, such as CO and H₂ released from the bath, in the space above the bath with oxygen-containing gas, typically air, and transferring the heat generated by the post-combustion to the bath to contribute to the thermal energy required to smelt the metalliferous materials.

The HIsmelt process also includes forming a transition zone above the nominal quiescent surface of the bath in which there is a favourable mass of ascending and thereafter descending droplets or splashes or streams of molten metal and/or slag which provide an effective medium to transfer to the bath the thermal energy generated by post-combusting reaction gases above the bath.

In the HIsmelt process metalliferous material and solid carbonaceous material are injected into a molten bath through a number of solids injection lances (sometimes referred to as "tuyeres") which are inclined to the vertical so as to extend downwardly and inwardly through a side wall of a direct smelting vessel and into a lower region of the vessel so as to deliver at least part of the solids material into a molten metal layer in the bottom of the vessel. To promote the post-combustion of reaction gases in an upper part of the vessel, a blast of hot air, which may be oxygen-enriched, is injected into an upper region of the vessel through a downwardly extending hot air injection lance. Off gases resulting from post-combustion of reaction gases in the vessel are taken away from the upper region of the vessel through an off gas duct. The vessel includes water cooled panels in the side wall and the roof of the vessel, and water is circulated continuously through the panels in a continuous circuit.

The HIsmelt process enables large quantities of molten iron to be produced by direct smelting metalliferous material in a molten bath. To enable such levels of production, large quantities of both metalliferous material and carbonaceous material must be supplied to the vessel.

A further known direct smelting process for an iron-containing metalliferous material which involves integrated pre-treatment of incoming metalliferous feed material in a smelt cyclone positioned above and communicating with a direct smelting vessel is described in International application PCT/AU99/00884 (WO 00/022176) in the name of the applicant. In the context of the present invention a smelt cyclone positioned above and communicating with a direct smelting vessel form a direct smelter. Further descriptions of this variant can be found in the following patent applications and patents: (i) (Netherlands) NL9401103 (Australia) AU-B-21793/95, (ii) Netherlands 9500264 (Australia) AU-B-43396/96 and (iii) (Europe) EP03740456.3 (Australia) AU-B-2003281064 in the name of Tata Steel (formerly known as Corus and before that known as Hoogovens).

The term "smelt cyclone" is understood herein to mean a vessel that typically defines a cylindrical chamber and is constructed so that feed materials supplied to the chamber move in a path around a vertical central axis of the chamber and can withstand high operating temperatures sufficient to at least partially smelt metalliferous feed materials. The applications and patents mentioned in the preceding paragraph disclose examples of smelt cyclones.

For convenience, the smelt cyclone variant of the HIsmelt process is referred to hereinafter as the "HIsarna" process. It is understood that the "HIsarna" process incorporates the "HIsmelt" process in the sense that bath smelting (involving coal injection, splash generation, metal-slag mixing, post-combustion and heat transfer to the bath) are essentially the same in both processes. In the HIsmelt process the ore, coal and flux are all injected into the bath via lances extending into a direct smelting vessel. In the HIsarna process typically only the carbonaceous feed (coal) and flux are injected into the bath via lances in the direct smelting vessel. In the HIsarna process, incoming metalliferous feed material, such as iron ore, is typically injected into and heated and partially melted and partially reduced in a smelt cyclone located directly above and communicating with the direct smelting vessel. Hot partially combusted offgas from the direct smelting vessel enters the bottom of the smelt cyclone and oxygen-containing gas (typically technical-grade oxygen) is injected via tuyeres arranged in such a way as to generate a cyclonic swirl pattern in a horizontal plane, i.e. about a vertical central axis of the chamber of the smelt cyclone. This injection of oxygen-containing gas leads to further combustion of smelting furnace offgas, resulting in very hot (cyclonic) flames. Finely divided incoming metalliferous feed material is injected pneumatically into these flames via tuyeres, resulting in rapid heating and partial melting accompanied by partial reduction (roughly 10-20% reduction). Hot, partially melted metalliferous feed material is thrown outwards onto the walls of the smelt cyclone by cyclonic swirl action, and subsequently falls by gravity into the direct smelting vessel below.

The net effect is a two-step countercurrent process configuration for the HIsarna process. Incoming metalliferous feed material is heated, calcined and partially reduced by the outgoing hot smelter offgas (with oxygen-containing gas addition). In a general sense, this countercurrent arrangement increases productivity and energy efficiency.

The applicant has determined that the HIsmelt and HIsarna processes can only tolerate sulphur in molten metal up to about 0.25 wt%. At metal sulphur percentages above this amount, carbon dissolution from coal into molten metal is compromised and process efficiency in smelters declines. This is understood by the applicant to occur because sulphur competes with carbon in a dissolution context - more sulphur makes it more difficult for carbon from injected carbonaceous material (typically coal) to dissolve in the molten metal. As a consequence it is necessary to limit the sulphur content of feed materials and recycle materials to the HIsmelt and HIsarna processes such that sulphur in molten metal remains below about 0.25 wt%.

For most types of commercially available iron ore, sulphur is usually not a major issue. For example, in Brazilian iron ore sulphur is typically less than 0.01 wt%, whilst in Australian Pilbara ores it is typically 0.02-0.03 wt%. The sulphur content of metallurgical coal is usually around 0.6-0.8 wt%, and with this type of ore-coal combination the total sulphur input is usually dominated by coal.

In certain parts of the world (eg China) it is possible to find metalliferous materials with substantially higher sulphur contents (eg 0.3-1.0 wt%). It is generally considered to be impossible to operate a HIsmelt direct smelting process with this type of metalliferous feed material, since sulphur in the molten metal would exceed 0.25 wt% by a significant margin. In order to use this type of metalliferous feed material in a HIsmelt process, it is necessary to pre-treat the material externally (eg in a rotary kiln or fluidized bed with a relatively oxidizing atmosphere, achieving temperatures around 800-1100°C) to burn out sulphur. Under such external pre-treatment conditions solid-bound sulphur is converted into SO₂ which is released to the offgas. The remaining solids then have a reduced sulphur level.

Whilst the external, non-integrated pre-treatment described in the preceding paragraph is feasible in a technical sense, it may be unattractive in commercial terms due to additional capital and operating cost requirements.

WO 00/22176 A1 discloses a process and an apparatus for producing metals from a metalliferous feed material. WO 98/42878 A1 discloses a process for direct production of cast iron from fine iron ore and fine coal in an apparatus suitable to carry out said process.

The above description is not to be taken as an admission of the common general knowledge in Australia or elsewhere.

### SUMMARY OF THE DISCLOSURE

The present invention is based on a realisation that a modified form of the HIsarna process can achieve the necessary level of sulphur removal from incoming metalliferous feed material without the need for a separate (external) sulphur pre-treatment step.

The applicant has found that significant sulphur removal from incoming metalliferous feed material can be achieved in a smelt cyclone of a HIsarna smelter if oxygen potential is adjusted appropriately.

The applicant has also found that other parameters such as temperature and size distribution of metalliferous feed material can have an impact on sulphur removal from metalliferous feed material in a smelt cyclone.

Removal of sulphur is favoured by high oxygen potential. This selection of the operating conditions for a HIsarna smelter makes it possible to use high sulphur metalliferous feed material (without pre-treatment for sulphur removal) and, at the same time, maintain bath metal sulphur content below 0.25 wt%.

Oxygen potential may be controlled by adjusting the overall balance of ore and coal feed to the smelter, in conjunction with the relative amounts of oxygen injected into the smelter and the smelt cyclone. By maintaining the degree of post combustion in the offgas leaving the smelt cyclone in the range 75-100%, it is possible to achieve sufficient sulphur removal in the smelt cyclone (typically 50-80%).

The term "degree of post combustion" is understood herein to mean:

100 x [%CO₂+%H₂O]/[%CO+%CO₂+%H₂+%H₂O]).

Removal of sulphur is also favoured by high temperature. The meaning of the term "high temperature" is a function of the metalliferous feed material. For example, in the case of metalliferous feed materials in the form of iron-containing feed materials, the term "high temperature" is understood herein to mean temperatures of at least 1100°C and typically temperatures of at least 1200°C.

Removal of sulphur is also favoured by selecting the size distribution of the incoming metalliferous feed material such that exposed particle surface area is high enough to allow sufficient sulphur removal, i.e. burn-out of sulphur.

The present invention is as defined in the appended claims.

According to the present invention there is provided a process for direct smelting a metalliferous feed material containing at least 0.2 wt. % sulphur and producing metal with sulphur content below 0.25%, the process comprising (a) at least partially reducing and partially melting the metalliferous feed material in a smelt cyclone (2) and (b) completely smelting the at least partially reduced/melted material in a molten bath of a direct smelting vessel (4), and the process being characterised by maintaining an oxygen potential in the smelt cyclone (2) so that an offgas from the smelt cyclone (2) has a post combustion degree of 75-100%, wherein said oxygen potential is maintained by injecting oxygen into the smelt cyclone and the direct smelting vessel (4), wherein a temperature of at least 1100°C is maintained in the smelt cyclone (2); wherein particle size of the metalliferous feed material is no more than 6 mm; and wherein 50-80% of sulphur is released into the offgas in the smelt cyclone (2).

The metalliferous feed material may be any material that contains metal oxides.

The metalliferous feed material may be ores, partly reduced ores and metal containing waste streams.

The metalliferous feed material may be an iron-containing feed material, such as an iron ore.

The sulphur content in the metalliferous feed material may be at least 0.25 wt.%.

The sulphur content in the metalliferous feed material may be at least 0.3 wt.%.

The sulphur content in the metalliferous feed material may be at least 0.5 wt.%.

The sulphur content in the metalliferous feed material may be less than 1 wt.%.

The process may comprise maintaining a high temperature in the smelt cyclone.

In a situation in which the metalliferous feed material is an iron-containing feed material, the process may comprise maintaining a high temperature of at least 1100°C, typically at least 1200°C in the smelt cyclone.

The process may comprise maintaining the oxygen potential in the smelt cyclone by adjusting the overall balance of metalliferous feed material to the smelt cyclone and carbonaceous feed material to the smelter in conjunction with the relative amounts of oxygen-containing gas injected into the smelter and the smelt cyclone.

The process may comprise maintaining the oxygen potential in the smelt cyclone that is sufficient so that the offgas from the smelt cyclone has a post combustion degree of at least 80%.

The process may comprise maintaining the oxygen potential in the smelt cyclone that is sufficient so that the offgas from the smelt cyclone has a post combustion degree of at least 85%.

The process may comprise maintaining the oxygen potential in the smelt cyclone that is sufficient so that the offgas from the smelt cyclone has a post combustion degree of at least 90%.

The process may comprise selecting the particle size of the metalliferous feed material to be supplied to the smelt cyclone to be no more than 6 mm.

The process may comprise selecting the particle size of the metalliferous feed material to be supplied to the smelt cyclone to be no more than 3 mm.

The metalliferous feed material to be supplied to the smelt cyclone is preferably less than 1 mm.

The process may be characterised by maintaining the conditions in the smelt cyclone so that at least a substantial part of the sulphur is released as SO₂ into the off gas.

According to the present invention there is also provided a metal product having a sulphur content of less than 0.2 wt% produced from a metalliferous feed material having a sulphur content of at least 0.2 wt%.

According to the present invention there is also provided an iron product having a sulphur content of less than 0.2 wt% produced from a metalliferous feed material having a sulphur content of at least 0.2 wt%.

The sulphur content in the metalliferous feed material may be at least 0.25 wt.%.

The sulphur content in the metalliferous feed material may be at least 0.3 wt.%.

The sulphur content in the metalliferous feed material may be at least 0.5 wt.%.

The sulphur content in the metalliferous feed material may be less than 1 wt.%.

### BRIEF DESCRIPTION OF THE DRAWINGS

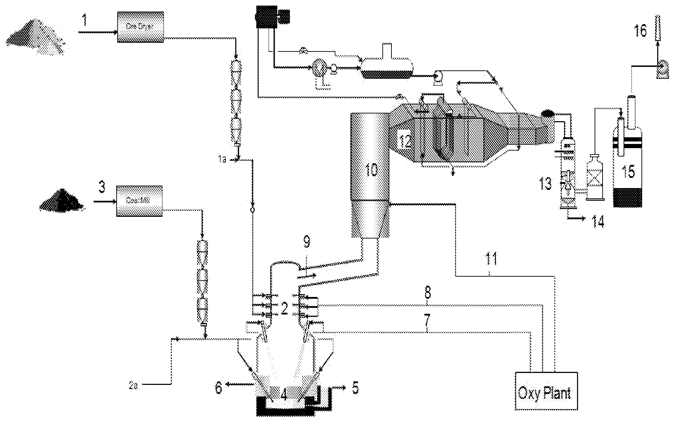

A specific embodiment will now be described, by way of example only, with reference to the accompanying Figure which is a flow sheet of one embodiment of a process for direct smelting iron ore in accordance with the present invention.

### DESCRIPTION OF EMBODIMENTS

By way of a first example of how sulphur reports in a HIsmelt process, modelling work carried out by the applicant indicates that if a HIsmelt process is fed with a metalliferous feed material in the form of iron ore containing 0.2 wt% sulphur and zero dust recycle to the smelter, the resulting level of sulphur in molten metal will be 0.17 wt%. In this modelling work, if 90% of the process dust/sludge is recycled to the smelter, sulphur in molten metal will increase to 0.23 wt%.

By way of a second example of how sulphur reports in a HIsmelt process, modelling work carried out by the applicant indicates that if a HIsmelt process is fed with a metalliferous feed material in the form of iron ore containing 0.7 wt% sulphur and zero dust recycle to the smelter, the resulting level of sulphur in molten metal will be 0.37 wt%. In this modelling work, if 90% of the process dust/sludge is recycled to the smelter, sulphur in molten metal will increase to 0.44% wt%.

The first and second examples and operational experience of the applicant show that about 0.2 wt% sulphur in an ore feed to the HIsmelt process represents an upper limit for the HIsmelt process. With ore containing more than 0.2 wt% sulphur it becomes necessary to pre-treat the ore as described above to reduce the sulphur content to about 0.2 wt%.

By way of a third example, modelling work carried out by the applicant with the HIsmelt process indicates that if a modified HIsarna process in accordance with the present invention is fed with a metalliferous feed material in the form of iron ore containing 0.7 wt% sulphur and zero dust recycle to the smelter, and conditions such as operating temperature, particle size and oxygen potential in the smelt cyclone are adjusted as described above and achieve 70% burn-out of sulphur in the iron ore supplied to the smelt cyclone, the resulting level of sulphur in molten metal will be 0.16 wt%. In this modelling work, if 90% of the process dust/sludge is recycled to the smelter, sulphur in molten metal will decrease to 0.14% wt% (this is a consequence of additional sulphur burn-out from dust occurring in the waste heat recovery system).

The third example, taken in conjunction with the first and second examples, shows that the modified HIsarna process in accordance with the present invention is capable of treating high sulphur metalliferous feed material directly and without the need for sulphur-burning pre-treatment external to the HIsarna smelter.

It is also noteworthy that the modified HIsarna process in accordance with the present invention delivers most of the released sulphur as SO₂ into the off gas, where it may be scrubbed with an agent such as limestone slurry to produce gypsum. The smelt cyclone process, being fully oxygen-blown, achieves this using a significantly lower total volume of off gas (compared with the HIsmelt process). This further minimises cost in terms of required scrubbing equipment, leading to cost-effective and environmentally clean sulphur emission control.

The operating parameters for the modified HIsarna process in accordance with the present invention to use metalliferous feed material with high (0.2-1.0 wt%) sulphur include the following:
1. Selecting the process operating conditions to operate at a high oxygen potential in the smelt cyclone such that offgas leaving the smelt cyclone has a post combustion degree of at least 75% and typically in a range of 80-100%. Achieving the target post combustion degree involves selection of conditions from an interlinked set of parameters including (but not limited to) carbonaceous material (such as coal) and metalliferous feed material (such as iron ore) feed rates, oxygen feed rates to the smelter and smelt cyclone and heat losses from the smelter.
2. Operating at a high temperature in the smelt cyclone.
3. Selecting the size distribution of the incoming metalliferous feed material such that exposed particle surface area is high enough to allow sufficient sulphur removal, i.e. burn-out. Normal smelt cyclone operation requires pneumatic feed of solids, and this calls for a particle size distribution top size of no greater than about 6 mm. Finer grind sizes may be used in any event. However, for sulphur burnout it may be appropriate to impose a lower top size than would otherwise have been the case (depending on the specific nature of the particles and the kinetics of sulphur burnout).

An embodiment of a process for direct smelting iron ore in accordance with the present invention is described with reference to the flow sheet shown in the attached Figure.

The process shown in the Figure is based on the use of a direct smelter that is a combination of a smelt cyclone (2) and a molten bath-based direct smelting vessel (4) located directly beneath the smelt cyclone (2), with direct communication between the two chambers of the smelter.

The above-referenced patents and patent applications provide details of the structure and basic operating conditions for the smelt cyclone (2) and the molten bath-based direct smelting vessel (4), including the supply of feed materials including metalliferous feed material, carbonaceous material, and oxygen-containing gas.

With reference to the Figure, a blend (1) of high sulphur magnetite-based ore with a sulphur content of 0.7 wt% and a top size of 6 mm and limestone is fed, via an ore dryer, into the smelt cyclone (2) of the smelter using pneumatic conveying gas (1a). Limestone represents roughly 8-10 wt% of the combined stream of ore and limestone. Coal (3) is fed, via a separate dryer, to the direct smelting vessel (4) of the smelter. The coal is injected deeply into a molten bath of metal and slag using conveying gas (2a). Oxygen (7) is injected into direct smelting vessel (4) to post combust gases, typically CO and H₂, generated in and released from the molten bath and provide the necessary heat for the smelting process. Oxygen (8) is injected into the smelt cyclone (2) to preheat, partly melt and partly desulphurise the ore.

Smelter products are hot, i.e. molten, metal (5) and molten slag (6).

The process conditions, as described further below, are controlled so that the sulphur content of the molten metal (5) in the direct smelting vessel (4) is 0.14-0.16%.

The operating conditions, including but not limited to, coal and ore feed rates, oxygen feed rates to the direct smelting vessel (4) and the smelt cyclone (2) and heat losses from the smelter, are selected so that offgas leaving the smelt cyclone (2) via an offgas outlet duct (9) has a post-combustion degree of at least 80% and typically around 90%.

With the degree of post combustion around 90%, about 70% of the sulphur originally present in the ore is released to the offgas (mainly in the form of SO₂) in the smelt cyclone. This level of sulphur burn-out in the ore in the smelt cyclone (2) reduces the amount of sulphur in the partly reduced and partly melted ore that is produced in the smelt cyclone (2) and then moves downwardly into the direct smelting vessel (4). The end result is that the sulphur content of the molten metal (5) produced in the direct smelting vessel (4) is 0.14-0.16%. As will be evident from the above description, this sulphur content is well within an acceptable operating range.

Offgas from the smelt cyclone (2) passes via an offgas duct (9) to an offgas incinerator (10), where additional oxygen (11) is injected to burn residual CO/H₂ and provide a degree of free oxygen (typically 1-2%) in the fully combusted flue gas. Some further removal of sulphur from the dust (liberated as SO₂ in the gas) is achieved at the same time.

Fully combusted sulphur-laden gas then passes through a waste heat recovery section (12) where the gas is cooled and steam is generated. Flue gas then passes through a wet scrubber (13) where cooling and dust removal are achieved. The resulting sludge that is discharged from the bottom of the scrubber (13) is available for recycle to the smelter via the ore feed stream (1).

Cool sulphur-laden flue gas leaving the scrubber (13) is fed to a flue gas desulphurisation unit (14, 15). In this unit a limestone slurry is sprayed into the gas and the majority of the sulphur (around 98%) is converted to CaSO4 hydrate (gypsum) which may be recovered as a by-product.

Clean flue gas is then vented via a stack (16). This gas consists mainly of CO₂ and, if appropriate, it can be compressed and geo-sequestered (with appropriate removal of residual non-condensable gas species).

Many modifications may be made to the embodiment of the process of the present invention described above without departing from the scope of the invention, as defined in the appended claims.

By way of example, the present invention is not limited to the specific feed material described in relation to the embodiment.

In the claims which follow, and in the preceding description, except where the context requires otherwise due to express language or necessary implication, the word "comprise" and variations such as "comprises" or "comprising" are used in an inclusive sense, i.e. to specify the presence of the stated features but not to preclude the presence or addition of further features in various embodiments of the process as disclosed herein.

## Claims

1. A process for direct smelting a metalliferous feed material containing at least 0.2 wt. % sulphur and producing metal with sulphur content below 0.25%, the process comprising (a) at least partially reducing and partially melting the metalliferous feed material in a smelt cyclone (2) and (b) completely smelting the at least partially reduced/melted material in a molten bath of a direct smelting vessel (4), and the process being **characterised by** maintaining an oxygen potential in the smelt cyclone (2) so that an offgas from the smelt cyclone (2) has a post combustion degree of 75-100%, wherein
said oxygen potential is maintained by injecting oxygen into the smelt cyclone and the direct smelting vessel (4), wherein a temperature of at least 1100°C is maintained in the smelt cyclone (2); wherein particle size of the metalliferous feed material is no more than 6 mm; and wherein 50-80% of sulphur is released into the offgas in the smelt cyclone (2).

2. The process defined in claim 1 wherein the sulphur content in the metalliferous feed material is at least 0.25 wt.%.

3. The process defined in claim 1 wherein the sulphur content in the metalliferous feed material is at least 0.3 wt.%.

4. The process defined in claim 1 wherein the sulphur content in the metalliferous feed material is at least 0.5 wt.%.

5. The process defined in any one of the preceding claims comprising maintaining the oxygen potential in the smelt cyclone (2) so that the offgas from the smelt cyclone (2) has a post combustion degree of at least 80%.

6. The process defined in any one of the preceding claims comprising maintaining the oxygen potential in the smelt cyclone (2) so that the offgas from the smelt cyclone (2) has a post combustion degree of 90%; wherein 70% of the sulphur is released into the offgas in the smelt cyclone (2).

7. The process defined in any one of the preceding claims wherein the metalliferous feed material is less than 1 mm.

8. The process defined in claim 1 wherein the metalliferous feed material comprises 8-10 wt% limestone.

## Patentansprüche

1. Verfahren zum Direktschmelzen eines mindestens 0,2 Gew.-% Schwefel enthaltenden metallhaltigen Einsatzstoffs und zur Herstellung von Metall mit einem Schwefelgehalt unter 0,25 %, wobei man bei dem Verfahren (a) den metallhaltigen Einsatzstoff in einem Schmelzzyklon (2) zumindest teilweise reduziert und teilweise schmilzt und (b) den zumindest teilweise reduzierten/geschmolzenen Stoff in einem Schmelzbad eines Direktschmelzgefäßes (4) vollständig schmilzt und wobei das Verfahren **dadurch gekennzeichnet ist, dass** in dem Schmelzzyklon (2) ein Sauerstoffpotential derart aufrecht erhalten wird, dass ein Abgas aus dem Schmelzzyklon (2) einen Nachverbrennungsgrad von 75-100 % aufweist, wobei das Sauerstoffpotential durch die Einspritzung von Sauerstoff in den Schmelzzyklon und das Direktschmelzgefäß (4) aufrecht erhalten wird, wobei in dem Schmelzzyklon (2) eine Temperatur von mindestens 1100 °C aufrechterhalten wird; wobei die Teilchengröße des metallhaltigen Einsatzstoffs nicht mehr als 6 mm beträgt; und wobei 50-80 % des Schwefels in das Abgas im Schmelzzyklon (2) abgegeben werden.

2. Verfahren nach Anspruch 1, wobei der Schwefelgehalt in dem metallhaltigen Einsatzstoff mindestens 0,25 Gew.-% beträgt.

3. Verfahren nach Anspruch 1, wobei der Schwefelgehalt in dem metallhaltigen Einsatzstoff mindestens 0,3 Gew.-% beträgt.

4. Verfahren nach Anspruch 1, wobei der Schwefelgehalt in dem metallhaltigen Einsatzstoff mindestens 0,5 Gew.-% beträgt.

5. Verfahren nach einem der vorhergehenden Ansprüche, wobei man das Sauerstoffpotential in dem Schmelzzyklon (2) derart aufrecht erhält, dass das Abgas aus dem Schmelzzyklon (2) einen Nachverbrennungsgrad von mindestens 80 % aufweist.

6. Verfahren nach einem der vorhergehenden Ansprüche, wobei man das Sauerstoffpotential in dem Schmelzzyklon (2) derart aufrecht erhält, dass das Abgas aus dem Schmelzzyklon (2) einen Nachverbrennungsgrad von 90% aufweist; wobei 70 % des Schwefels in das Abgas im Schmelzzyklon (2) abgegeben werden.

7. Verfahren nach einem der vorhergehenden Ansprüche, wobei der metallhaltige Einsatzstoff weniger als 1 mm ist.

8. Verfahren nach Anspruch 1, wobei der metallhaltige Einsatzstoff 8-10 Gew.-% Kalk umfasst.

## Revendications

1. Procédé pour la fusion directe d'une matière d'alimentation métallifère contenant au moins 0,2 % en poids de soufre et la production d'un métal doté d'une teneur en soufre inférieure à 0,25 %, le procédé comprenant (a) au moins la réduction partielle et la fusion partielle de la matière d'alimentation métallifère dans un cyclone de fusion (2) et (b) la fusion complète de la matière au moins partiellement réduite/fondue dans un bain fondu d'une cuve de fusion directe (4), et le procédé étant **caractérisé par** le maintien d'un potentiel d'oxygène dans le cyclone de fusion (2) de sorte qu'un effluent gazeux du cyclone de fusion (2) possède un degré de post-combustion de 75 à 100 %, ledit potentiel d'oxygène étant maintenu par l'injection d'oxygène dans le cyclone de fusion et la cuve de fusion directe (4), une température d'au moins 1 100 °C étant maintenue dans le cyclone de fusion (2) ; la taille de particule de la matière d'alimentation métallifère n'étant pas supérieure à 6 mm ; et 50 à 80 % de soufre étant relâché dans l'effluent gazeux dans le cyclone de fusion (2).

2. Procédé défini dans la revendication 1, la teneur en soufre dans la matière d'alimentation métallifère étant d'au moins 0,25 % en poids.

3. Procédé défini dans la revendication 1, la teneur en soufre dans la matière d'alimentation métallifère étant d'au moins 0,3 % en poids.

4. Procédé défini dans la revendication 1, la teneur en soufre dans la matière d'alimentation métallifère étant d'au moins 0,5 % en poids.

5. Procédé défini dans l'une quelconque des revendications précédentes comprenant le maintien du potentiel d'oxygène dans le cyclone de fusion (2) de sorte que l'effluent gazeux du cyclone de fusion (2) possède un degré de post-combustion d'au moins 80 %.

6. Procédé défini dans l'une quelconque des revendications précédentes comprenant le maintien du potentiel d'oxygène dans le cyclone de fusion (2) de sorte que l'effluent gazeux du cyclone de fusion (2) possède un degré de post-combustion d'au moins 90 % ; 70 % du soufre étant relâché dans l'effluent gazeux dans le cyclone de fusion (2).

7. Procédé défini dans l'une quelconque des revendications précédentes, la matière d'alimentation métallifère étant inférieure à 1 mm.

8. Procédé défini dans la revendication 1, la matière d'alimentation métallifère comprenant 8 à 10 % en poids de calcaire.
